# EUROPEAN PATENT APPLICATION

(11) **EP 2 395 494 A1**
(43) Date of publication of application: **14.12.2011**
(21) Application number: 10290322.6
(22) Date of filing: 11.06.2010
(51) Int. Cl.: G09B 9/042, A63B 71/06

(54) **Improved docking station for a personal transporter**

(71) Applicant: Alcatel Lucent, 75007 Paris (FR)
(72) Inventor: Van Broeck, Sigurd, 2980 Zoersel (BE); van Den Broeck Marc, 2860 Sint-Katelijene Waver (BE); Lou Zhe, 2000 Antwerpen (BE)
(74) Representative: Moens, Marnix Karel Christiane

(57) **Abstract**

The present invention is directed to a docking station for a personal transporter (PT), said PT having a PT control logic for converting PT manipulations into PT control signals, said docking station comprising an interface for connecting the PT control logic to an external computer and for converting PT control signals into application control signals suitable for controlling software applications and/or software services. Further, the present invention is directed to the use of such docking station for controlling software applications and/or software services. Additionally, the present invention is directed to an assembly comprising such docking station and a PT having a PT control logic for converting PT manipulations into PT control signals.

## Description

### FIELD OF THE INVENTION

The present invention relates to a docking station for a personal transporter (PT) and its use for controlling software applications and/or software services. Further, the present invention relates to an assembly comprising such docking station and a PT having a PT control logic for converting PT manipulations into PT control signals.

### BACKGROUND OF THE INVENTION

As commonly known, car or motor cycle simulators aim to simulate reality car or motor cycle driving by equipping the simulators with movable seats, real steering wheels, etc. to give the user the impression that he is really driving on the road.

Obviously, the above simulators have to be equipped with technologically high-level and expensive features in order to increase the level of reality, while the vehicle used in the simulator cannot be used in reality as a personal transporter and while a real vehicle is available, even parked outside or in the garage, but left unused.

Examples of a simulators wherein the vehicle used can indeed also be used in reality are stationary bicycle systems for indoor cycling (e.g. Tacx Virtual Reality trainers) equipped with proprietary software to record, monitor and measure the achievements of the cyclist, with audio and video systems, control logic to control the interactive video application, and force feedback techniques.

However, a general disadvantage of bicycle simulators is that, since the actual bicycle does not contain control logic providing control signals suitable for controlling the software application, all sensors, corresponding control logic, and force feedback systems have to be provided on the docking station itself to provide interactivity between the user and the software application. Obviously, this makes such docking station and the simulator as a whole very specific, depending on the software application, and therefore not flexible in use.

Considering the above, it is an object of the present invention to provide a docking station that is equipped in a manner to allow the use of real personal transporters in a simulator such that the use of fake vehicles may be decreased or even may become redundant.

Further, it is an object of the present invention to provide a docking station that does not necessarily need to be equipped with application or service dependent sensors, control logic and force feedback systems, such that it can be flexibly used for different software applications and/or services.

The present invention meets the above objects by providing a docking station for a personal transporter (PT) wherein the PT has a PT control logic for converting PT manipulations into PT control signals and wherein the docking station comprises an interface for connecting the PT control logic to an external computer and for converting PT control signals into application control signals suitable for controlling software applications and/or software services.

### SUMMARY OF THE INVENTION

The present invention is directed to a docking station for a personal transporter (PT), said PT having a PT control logic for converting PT manipulations into PT control signals, said docking station comprising an interface for connecting the PT control logic to an external computer and for converting PT control signals into application control signals suitable for controlling software applications and/or software services.

Further, the present invention is directed to the use of such docking station for controlling software applications and/or software services.

Additionally, the present invention is directed to an assembly comprising such docking station and a PT having a PT control logic for converting PT manipulations into PT control signals.

### DESCRIPTION OF THE INVENTION

In the context of the present invention a personal transporter (PT) is to be understood as a vehicle for personal transport comprising some form of control logic for converting manipulations by users into control signals. Examples are for instance small electric vehicles such as Segways, Winglets, electric skateboards, and the like, but also motorcycles, cars, quads, electric wheelchairs, etc.

In a first embodiment in accordance with the present invention, a docking station for a personal transporter (PT) is provided, said PT having a PT control logic for converting PT manipulations into PT control signals, said docking station comprising an interface for connecting the PT control logic to an external computer and for converting PT control signals into application control signals suitable for controlling software applications and/or software services.

By implementing in the docking station an interface for connecting the PT control logic to an external computer and for converting PT control signals into application control signals suitable for controlling software applications and/or software services, the use of real personal transporters in a simulator may become possible such that the use of fake vehicles may be decreased or even may become redundant.

Further, because the interface allows the PT control signals from the PT's own sensors and control logic being used, the docking station may not need to be equipped anymore with application or service dependent sensors, control logic and force feedback systems; such that it may be flexibly used for different software applications and/or services. The docking station may be hooked up to any interactive application or service via the interface. Such docking station may then emit application control signals related to PT manipulations, i.e. the actions performed by the user(s) on the docked PT, for use by interactive applications and services.

In another embodiment in accordance with the present invention, the docking station may comprise a software adaptation layer for adapting the control logic of the personal transporter in docked condition. Such software adaptation layer may adapt the PT control logic in such a way that it emits different PT control signals upon certain manipulations when the PT is docked than when it is undocked.

Additionally, the software adaptation layer may also convert PT manipulations into PT control signals and/or in application control signals. In this case, the software adaptation layer overrules or at least takes over part of the PT control logic.

The software adaptation layer may be provided separately from the interface or as a part of the interface.

Alternatively, the software adaptation layer or part of it may also be implemented in the PT itself. In this case the software adaptation layer is provided by the PT manufacturer and compatible with the docking station interface.

In a further embodiment in accordance with the present invention, the interface may be adapted to convert application control signals into PT control signals. Application control signals emitted by the software applications and/or software services may be provided as input for the PT control logic.

In a particular embodiment in accordance with the present invention, a docking station for a personal transporter may be provided, wherein the PT control signals command mechanics inside the PT, thereby inducing force feedback. As an alternative to force feedback systems in the docking station itself, by means of the interface an/or the software adaptation layer the docking station may convert application control signals into PT control signals commanding certain mechanics inherent to the PT or introduced into the PT by the manufacturer. As an example the user may feel e.g. bumps in the road, counter steering wheel rotation, or may be confronted with PT failures.

A docking station according to the present invention may be used for controlling any kind of software application or any kind of software service wherein a PT is usable, such as games, drive and sport simulators, virtual tourist services and educational services.

In addition the present invention provides an assembly comprising a PT having a PT control logic for converting PT manipulation into PT control signals and a docking station as described in the above embodiments.

In a particular embodiment, the assembly may comprise a PT having a software adaptation layer for adapting the control logic of the PT in docked condition.

In a further embodiment, the assembly may be complemented by additional feedforward or feedback systems like audio input and output and wind generators. Obviously also screens may be provided, such as a TV or a big wall-size or surround screen. In case of vehicles with a windshield, a screen may be the windshield itself. The software application may as such not only send application control signals to the PT but also streaming media.

### EXAMPLE:

For example, in case of a Segway PT, gyroscopic sensors are used to detect tilting of the Segway which indicates a departure from perfect balance. The Segway control logic commands motors driving the wheels as needed to bring it back into balance.

Upon docking the Segway, the PT control logic is connected via the interface of the docking station in accordance with the present invention to an external computer and the Segway control signals are converted into application control signals to control a virtual sightseeing tour application.

Further, the software adaptation layer in the docking station or in the PT adapts the Segway control logic in such manner that for example a lean forward does not spin the docked Segway forward but rather generates an appropriate backward spin to keep the person on the Segway in balance.

As an alternative to the force feedback provisions in the docking station, Segway manufacturers may provide the mechanics, e.g. anti-shock systems, inside the Segway so that the docking station only has to transfer the control signals between the virtual sightseeing tour application and the Segway to provide some kind of force feedback to feel bumps and holes in the virtual road.

## Claims

1. A docking station for a personal transporter (PT), said PT having a PT control logic for converting PT manipulations into PT control signals, said docking station comprising an interface for connecting the PT control logic to an external computer and for converting PT control signals into application control signals suitable for controlling software applications and/or software services.

2. A docking station for a personal transporter according to claim 1, further comprising a software adaptation layer for adapting the control logic of the personal transporter in docked condition.

3. A docking station for a personal transporter according to claim 2, wherein the software adaptation layer itself converts PT manipulations into PT control signals and/or in application control signals.

4. A docking station for a personal transporter according to claims 1 to 3, wherein the interface is further adapted to convert application control signals into PT control signals.

5. A docking station for a personal transporter according to claim 4, wherein the PT control signals command mechanics inside the PT, thereby inducing force feedback.

6. Use of a docking station according to any of the above claims for controlling software applications and/or software services.

7. An assembly comprising a PT having a PT control logic for converting PT manipulations into PT control signals and a docking station according to claims 1 to 5.

8. An assembly according to claim 7, wherein the PT comprises a software adaptation layer for adapting the control logic of the personal transporter in docked condition.
